# FASCICULE DE BREVET EUROPEEN

(11) **EP 2 425 581 B1**
(45) Date de publication et mention de la délivrance du brevet: **22.05.2019**
(21) Numéro de dépôt: 10727055.5
(22) Date de dépôt: 28.04.2010
(51) Int. Cl.: H04L 9/32

(54) **SYSTEME DE PROGRAMMATION D'UNE SERRURE COMPORTANT DES MOYENS DE COMMUNICATION SANS CONTACT DE TYPE NFC**
SYSTEM ZUM PROGRAMMIEREN EINES SCHLOSSES MIT KONTAKTLOSEN NFC-KOMMUNIKATIONSMITTELN
SYSTEM FOR PROGRAMMING A LOCK COMPRISING CONTACTLESS NFC COMMUNICATION MEANS

(30) Priorité: 30.04.2009 FR 0952856
(43) Date de publication de la demande: 07.03.2012
(73) Titulaire: ASSA ABLOY AB, 111 64 Stockholm (SE)
(72) Inventeur: Metivier, Pascal, 78810 Feucherolles (FR)
(74) Mandataire: Kramer Barske Schmidtchen Patentanwälte PartG mbB
(86) Numéro de dépôt international: PCT/FR2010/050807
(87) Numéro de publication internationale: WO 2010/125307

(56) Documents cités:
- GB-A- 2 449 510

## Description

L'invention concerne les serrures commandées au moyen d'un objet portatif formant clef, typiquement en forme de badge ou carte à puce sans contact, coopérant avec la serrure par un couplage mutuel non galvanique de type NFC (communication en champ proche).

Avec cette technologie, le couplage entre objet portatif et serrure est réalisé en faisant varier un champ magnétique produit par une bobine (technique dite "procédé par induction"). La serrure comporte à cet effet un circuit inductif excité par un signal alternatif qui produit un champ magnétique variable, détectable sur une portée de quelques centimètres tout au plus. L'objet portatif se trouvant dans cet espace reçoit l'énergie de ce champ (qui permet notamment de téléalimenter l'objet portatif, qui est généralement dépourvu de source d'alimentation propre) et module une charge interne. Cette modulation, codée par diverses données issues de l'objet portatif (identifiant, clef de cryptage, etc.) est détectée à son tour par la serrure, établissant ainsi la communication bidirectionnelle recherchée.

Il existe diverses techniques de codage et de cryptage pour sécuriser la communication sans contact entre l'objet portatif et la serrure, et protéger cette dernière contre tout risque de fraude.

Ces techniques de protection mettent en oeuvre des algorithmes et clefs implémentés dans la serrure. Toutefois, pour déjouer tout risque de fraude notamment pendant le transport de l'usine à l'emplacement définitif, la serrure n'est à l'origine pas pourvue de tous les éléments de sécurité permettant de mettre en oeuvre ces techniques.

Initialement, les serrures sont livrées avec des cartes provisoires dites "cartes d'urgence", qui permettent de manoeuvrer la serrure le temps de la pose, mais qui ne mettent pas en oeuvre les techniques de protection les plus élaborées ; les techniques cryptographiques utilisées à ce stade le sont avec une clef (logique) provisoire dite "clef de transport", également de nature temporaire, voire avec une durée d'utilisation limitée dans le temps.

Une fois la serrure posée, elle doit faire l'objet d'une opération de "programmation" afin d'y implémenter les algorithmes, les éléments de cryptographie avancée et clefs définitifs permettant d'obtenir le haut degré de sécurité recherché. Cette programmation est en pratique souvent malaisée à réaliser, avec des risques d'erreurs, même pour les professionnels de la serrurerie et *a fortiori* pour des utilisateurs individuels qui poseraient et voudraient programmer eux-mêmes leur serrure. Cette complexité et ces risques d'erreurs sont un obstacle à une large diffusion de ces serrures sans contact de type NFC, malgré les nombreux avantages qu'elles procurent, notamment en matière de sécurité.

GB2449510 divulgue des procédés et des systèmes permettant d'établir des relations et de créer des liens entre des entités (tels que des utilisateurs, des dispositifs, des organisations, etc.). Le procédé consiste à recevoir sur un premier dispositif sur une liaison sans fil de courte portée, un identifiant qui se rapporte à un dispositif voisin. Cet identifiant est envoyé à un serveur associé au premier appareil et au moins un identifiant d'un objet de données est également envoyé au serveur. Le serveur met l'objet de données à la disposition d'une entité associée au dispositif voisin en associant l'identifiant de cette entité et l'identifiant de l'objet de données. L'objet de données peut comprendre un paquet de données (par exemple un fichier ou un document), un lien vers des données stockées ailleurs ou une collection de données (par exemple une collection de détails de contact). La nature de la relation établie est déterminée par le paquet de données. Des modes de réalisation décrivent un système pour authentifier mutuellement des liens entre des dispositifs capables de communiquer à courte distance (Bluetooth, WiFi, infrarouge, etc.), chacun ayant une base de données de serveur associée stockant des identifiants uniques et entre lesquelles des données d'autorisation sont transmises. Un premier dispositif sans fil recherche des dispositifs sans fil proximaux et les affiche graphiquement. Lors de la sélection d'un périphérique affiché, une adresse IP d'un serveur est déterminée à partir de laquelle l'autorisation d'accès à l'équipement est demandée. Le serveur authentifie l'utilisateur du premier dispositif en demandant une vérification du dispositif affiché ou d'un serveur associé au premier dispositif. Lors de la vérification, l'utilisateur du premier appareil peut accéder aux données personnelles associées à l'utilisateur de l'appareil, contrôler l'appareil ou accéder à un service offert par le serveur. Des modes de réalisation concernent également le déverrouillage sans fil de véhicules, la publicité sur panneau d'affichage, les distributeurs automatiques de billets, les transferts de devises, le vote et les opérations bancaires.

Le but de l'invention est de proposer une nouvelle technique de programmation d'une serrure sans contact de type NFC, qui soit aisée à mettre en oeuvre même par un utilisateur profane, et qui au surplus ne nécessite pas de matériel spécifique. Et ceci, tout en conservant un très haut niveau de sécurité tout au long de la chaîne d'opérations allant du transport depuis l'usine de fabrication jusqu'à la programmation finale.

Le principe de l'invention consiste à utiliser pour cette étape de programmation un téléphone portable équipé d'une puce NFC et d'une antenne NFC, la carte SIM du téléphone étant utilisée comme élément de sécurisation des échanges de données opérés par la voie NFC.

Les échanges entre le téléphone et la serrure peuvent être sécurisés au moyen d'une application spécifique de type "applet" (appliquette) téléchargée au préalable par le téléphone. Cette applet, une fois chargée et activée, mettra en oeuvre automatiquement les différentes étapes nécessaires à la programmation de la serrure telles que le téléchargement d'un algorithme de cryptage, de clefs, d'identifiants, ... propres à assurer de manière parfaitement sécurisée la programmation de la serrure.

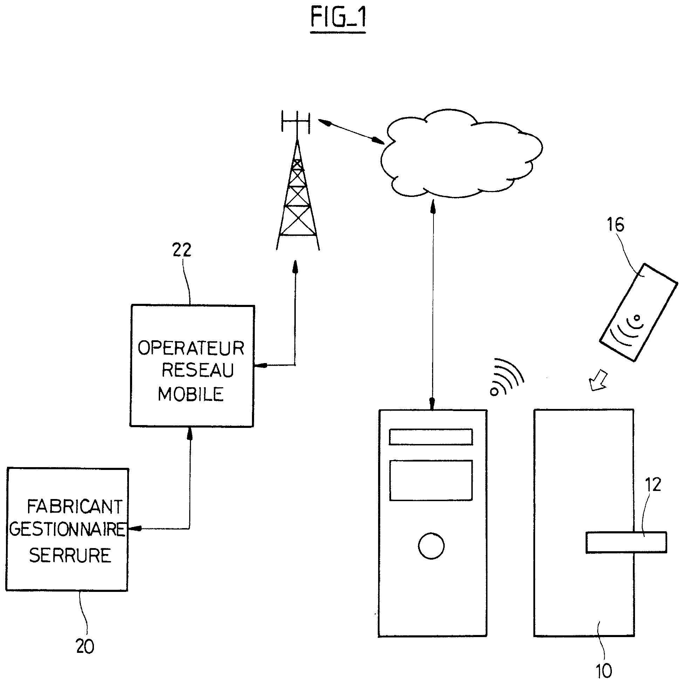

Un exemple de mise en oeuvre de l'invention est donné en référence à la Figure 1. Sur cette figure, la référence 10 désigne la serrure, qui se présente extérieurement sous forme d'un élément monobloc ne laissant paraître qu'une poignée 12 et une zone cible 14 pour la communication NFC, zone contre laquelle devra être présenté un objet portatif faisant fonction de clef d'ouverture de la serrure, objet tel qu'une carte à puce sans contact 16 munie de circuits appropriés.

A l'approche de la carte 16, la serrure produit un champ magnétique alternatif pour établir un couplage bidirectionnel d'échange de données avec la carte 16. La serrure peut alors, selon des techniques connues, interroger cette carte pour y lire des identifiants, codes, données, autorisations, etc., stockés dans la mémoire de celle-ci. Ces données sont vérifiées et, si elles sont conformes, commandent un moteur de déverrouillage des organes mécaniques de la serrure.

Pour éviter toute tentative de fraude, ces techniques sécuritaires ne peuvent pas être mises en oeuvre sur la serrure dans l'état où elle se trouve à la sortie de l'usine, pendant le transport jusqu'au site final et tant qu'elle n'est pas définitivement installée.

Ce n'est qu'une fois la serrure posée que les fonctions sécuritaires complètes seront activées, par une opération dite "programmation". Dans l'intervalle, la serrure est simplement manoeuvrable au moyen d'une carte dite "carte d'urgence" ne faisant intervenir que des algorithmes simplifiés basés sur une "clef de transport" provisoire.

On va maintenant décrire la manière dont est opérée cette programmation, de la manière caractéristique proposée par l'invention.

Cette programmation est opérée au moyen d'un téléphone portable 18 pourvu, outre les circuits de téléphonie permettant d'émettre et de recevoir des données, d'une puce NFC et d'une bobine d'induction formant antenne. Ces circuits permettent au téléphone de fonctionner en mode NFC, avec la carte SIM utilisée comme élément de sécurité pour la communication NFC.

La serrure, quant à elle, est identifiée par un identifiant unique, non modifiable, permettant de la reconnaître entre toutes (ci-après "l'identifiant"), semblable dans sa nature à l'identifiant IMEI d'identité internationale d'équipement mobile embarqué dans un terminal mobile GSM ou UMTS pour l'identification unique et définitive de l'équipement.

La première opération consiste à télécharger dans le téléphone une applet qui permettra d'exécuter automatiquement la séquence d'étapes nécessaire à la programmation de la serrure.

Ce téléchargement fait suite à une requête adressée par le téléphone 18 au site distant 20 du fabricant ou du gestionnaire de la serrure, par l'intermédiaire de l'opérateur 22 du réseau téléphonique mobile.

Une fois l'applet téléchargée par le téléphone 18, celle-ci est activée, ce qui déclenche la transmission depuis le site distant 20 vers le téléphone 18 des différents éléments nécessaires à la programmation de chaque serrure, notamment : l'identifiant enregistré de la serrure (ou la liste des identifiants des serrures s'il y a plusieurs serrures à programmer), un algorithme aléatoire unique, une clef de transport, une clef cryptographique, etc.

Une fois toutes ces données chargées dans le téléphone 18, il suffit à l'utilisateur de simplement présenter le téléphone devant la zone cible 14 de la serrure à programmer (ou de chacune des serrures à programmer) de manière à établir le couplage bidirectionnel NFC entre téléphone et serrure.

Le téléphone lit l'identifiant de la serrure à laquelle il est ainsi couplé : si l'identifiant lu dans la serrure concorde avec l'identifiant reçu par le téléphone du site distant (ou avec l'un des identifiants, dans le cas d'une pluralité de serrures à programmer), alors le téléphone détermine la clef de transport associée à cet identifiant.

Si la clef de transport de la serrure correspond à celle déterminée par le téléphone, ce dernier peut alors commencer le processus de programmation proprement dite de la serrure.

Tout d'abord, le téléphone remet à zéro la serrure, en désactivant la clef de transport et en rendant inopérantes les cartes d'urgence livrées avec la serrure.

Il charge ensuite dans la serrure les éléments nécessaires à la mise en oeuvre des procédures de sécurité, notamment l'algorithme aléatoire unique et la clef cryptographique définitive. La procédure cryptographique sécurisée peut alors être activée.

Pendant l'exécution du processus de programmation, l'utilisateur peut suivre l'avancement des opérations au moyen d'une barre de progression affichée sur l'écran du téléphone.

Une fois toutes les opérations correctement exécutées, l'applet génère un message de notification d'achèvement de la programmation de la serrure et affiche ce message sur l'écran du téléphone, indiquant que l'opération a été réalisée avec succès.

S'il y a lieu de programmer plusieurs serrures, la liste des serrures restant à programmer est affichée sur l'écran du téléphone.

## Revendications

1. Un système comprenant :
- au moins une serrure (10) munie de circuits électroniques d'émission/réception par voie NFC et de circuits électriques pour la commande d'organes mécaniques de verrouillage/déverrouillage, et
- un téléphone portable (18) muni de circuits lui permettant de fonctionner en mode NFC,
système dans lequel le téléphone comporte des moyens pour opérer une programmation initiale de la serrure, ces moyens incluant :
• des moyens pour établir un couplage bidirectionnel NFC entre la serrure et le téléphone ;
système **caractérisé en ce que** ces moyens incluent en outre :
• des moyens pour télécharger, sur le téléphone et depuis un site distant, une appliquette propre à exécuter automatiquement la séquence d'étapes ultérieures de programmation de la serrure ;
• des moyens pour télécharger, sur le téléphone et depuis le site distant, les éléments nécessaires à la programmation de la serrure, ces éléments incluant : un identifiant enregistré de la serrure, un algorithme aléatoire unique, une clef de transport et une clef cryptographique ;
• des moyens pour faire vérifier par le téléphone la concordance de l'identifiant et de la clef de transport mémorisés dans la serrure avec l'identifiant et de la clef de transport téléchargés depuis le site distant ;
• des moyens pour désactiver la clef de transport de la serrure ;
• des moyens pour charger depuis le téléphone dans la serrure l'algorithme aléatoire unique téléchargé et la clef cryptographique ; et
• des moyens pour générer un message de notification d'achèvement de la programmation de la serrure.

2. Procédé de programmation initiale d'au moins une serrure munie de circuits électroniques d'émission/réception par voie NFC et de circuits électriques pour la commande d'organes mécaniques de verrouillage/déverrouillage, par un téléphone portable muni de circuits lui permettant de fonctionner en mode NFC, ledit téléphone comportant des moyens pour opérer une programmation initiale de la serrure, le procédé étant **caractérisé en ce qu'**il comprend au moins les étapes suivantes:
• télécharger, sur le téléphone et depuis un site distant, une appliquette propre à exécuter automatiquement la séquence d'étapes de programmation de la serrure ;
• télécharger, sur le téléphone et depuis le site distant, les éléments nécessaires à la programmation de la serrure, ces éléments incluant : un identifiant enregistré de la serrure, un algorithme aléatoire unique, une clef de transport et une clef cryptographique ;
• établir un couplage bidirectionnel NFC entre la serrure et le téléphone ;
• faire vérifier par le téléphone la concordance de l'identifiant et de la clef de transport mémorisés dans la serrure avec l'identifiant et de la clef de transport téléchargés depuis le site distant ;
• désactiver la clef de transport de la serrure ;
• charger depuis le téléphone dans la serrure l'algorithme aléatoire unique téléchargé et la clef cryptographique ; et
• générer un message de notification d'achèvement de la programmation de la serrure.

## Patentansprüche

1. Ein System, umfassend:
- mindestens ein Schloss (10), das mit elektronischen Schaltungen zum Senden/Empfangen über NFC und mit elektrischen Schaltungen zum Betätigen von mechanischen Verriegelungs-/Entriegelungselementen versehen ist, und
- ein Mobiltelefon (18), das mit Schaltungen versehen ist, die es ihm ermöglichen, im NFC-Modus betrieben zu werden,
wobei das Telefon Mittel umfasst, um eine Ausgangsprogrammierung des Schlosses vorzunehmen, wobei diese Mittel beinhalten:
- Mittel zum Aufbauen einer bidirektionalen NFC-Kopplung zwischen dem Schloss und dem Telefon;
wobei das System **dadurch gekennzeichnet ist, dass** diese Mittel ferner beinhalten:
- Mittel, um auf das Telefon und von einer entfernten Website aus ein Applet herunterzuladen, das geeignet ist, die Sequenz der späteren Schritte zur Programmierung des Schlosses automatisch auszuführen;
- Mittel, um auf das Telefon und von der entfernten Website aus die zur Programmierung des Schlosses erforderlichen Elemente herunterzuladen, wobei diese Elemente beinhalten: eine registrierte Kennung des Schlosses, einen einmaligen Zufallsalgorithmus, einen Transportschlüssel und einen kryptographischen Schlüssel;
- Mittel, um vom Telefon die Übereinstimmung der Kennung und des Transportschlüssels, die im Schloss gespeichert sind, mit der Kennung und dem Transportschlüssel, die von der entfernten Website heruntergeladen wurden, überprüfen zu lassen;
- Mittel, um den Transportschlüssel des Schlosses zu deaktivieren;
- Mittel, um vom Telefon aus den heruntergeladenen einmaligen Zufallsalgorithmus und den kryptographischen Schlüssel in das Schloss zu laden; und
- Mittel, um eine Nachricht zur Meldung des Abschlusses der Programmierung des Schlosses zu erzeugen.

2. Verfahren zur Ausgangsprogrammierung mindestens eines Schlosses, das mit elektronischen Schaltungen zum Senden/Empfangen über NFC und mit elektrischen Schaltungen zum Betätigen von mechanischen Verriegelungs-/Entriegelungselementen versehen ist, über ein Mobiltelefon, das mit Schaltungen versehen ist, die es ihm ermöglichen, im NFC-Modus betrieben zu werden, wobei das Telefon Mittel umfasst, um eine Ausgangsprogrammierung des Schlosses vorzunehmen, wobei das Verfahren **dadurch gekennzeichnet ist, dass** es mindestens die folgenden Schritte umfasst:
- Herunterladen, auf das Telefon und von einer entfernten Website aus, eines Applets, das geeignet ist, die Sequenz der Schritte zur Programmierung des Schlosses automatisch auszuführen;
- Herunterladen, auf das Telefon und von der entfernten Website aus, der zur Programmierung des Schlosses erforderlichen Elemente, wobei diese Elemente beinhalten: eine registrierte Kennung des Schlosses, einen einmaligen Zufallsalgorithmus, einen Transportschlüssel und einen kryptographischen Schlüssel;
- Aufbauen einer bidirektionalen NFC-Kopplung zwischen dem Schloss und dem Telefon;
- Überprüfenlassen der Übereinstimmung der Kennung und des Transportschlüssels, die im Schloss gespeichert sind, mit der Kennung und dem Transportschlüssel, die von der entfernten Website aus heruntergeladen wurden, durch das Telefon;
- Deaktivieren des Transportschlüssels des Schlosses;
- Laden des heruntergeladenen einmaligen Zufallsalgorithmus und des kryptographischen Schlüssels vom Telefon aus in das Schloss; und
- Erzeugen einer Nachricht zur Meldung des Abschlusses der Programmierung des Schlosses.

## Claims

1. A system comprising:
- at least one lock (10) provided with electronic circuits for NFC transmission/reception and with electric circuits for the control of locking/unlocking mechanical elements, and
- a portable telephone (18) provided with circuits enabling it to operate in NFC mode,
system in which the telephone comprises means for performing an initial programming of the lock, said means including:
- means for establishing a bidirectional NFC coupling between the lock and the telephone;
the system being **characterized in that** these means further include:
- means for downloading, on the telephone and from a remote site, an applet operable to automatically execute the sequence of next steps for programming of the lock;
- means for downloading, on the telephone and from the remote site, the elements required for the lock programming, said elements including: a recorded lock identifier, a unique random algorithm, a transport key and a cryptographic key;
- means for making the telephone verify the matching of the identifier and the transport key stored in the lock with the identifier and the transport key downloaded from the remote site;
- means for deactivating the transport key of the lock;
- means for uploading from the telephone and into the lock the downloaded unique random algorithm and the cryptographic key; and
- means for generating a message for notifying the completion of the programming of the lock.

2. Initial programming method of at least one lock provided with electronic circuits for NFC transmission/reception and with electric circuits for the control of locking/unlocking mechanical elements, by a portable telephone provided with circuits enabling it to operate in NFC mode, said telephone comprising means for performing an initial programming of the lock, the method being **characterized in that** it includes at least the following steps:
- downloading, on the telephone and from a remote site, an applet operable to automatically execute the sequence of steps for programming of the lock;
- downloading, on the telephone and from the remote site, the elements required for the lock programming, said elements including: a recorded lock identifier, a unique random algorithm, a transport key and a cryptographic key;
- establishing a bidirectional NFC coupling between the lock and the telephone;
- making the telephone verify the matching of the identifier and the transport key stored in the lock with the identifier and the transport key downloaded from the remote site;
- deactivating the transport key of the lock;
- uploading from the telephone and into the lock the downloaded unique random algorithm and the cryptographic key; and
- generating a message for notifying the completion of the programming of the lock.
